**Europäisches Patentamt**

**European Patent Office**

**Office européen des brevets**

(11) Veröffentlichungsnummer: **0 204 066**
**B1**

(12) **EUROPÄISCHE PATENTSCHRIFT**

(45) Veröffentlichungstag der Patentschrift:
**22.03.89**

(21) Anmeldenummer: **86101250.8**

(22) Anmeldetag: **31.01.86**

(51) Int. Cl.⁴: **B 01 F 15/04**

(54) **Misch- und Dosiervorrichtung für strömende Medien.**

**Teilanmeldung 88102868 eingereicht am 26.02.88.**

(30) Priorität: **14.05.85 DE 3517325**

(43) Veröffentlichungstag der Anmeldung:
**10.12.86 Patentblatt 86/50**

(45) Bekanntmachung des Hinweises auf die Patenterteilung:
**22.03.89 Patentblatt 89/12**

(84) Benannte Vertragsstaaten:
**DE FR GB NL**

(56) Entgegenhaltungen:
**BE-A- 505 010**
**GB-A- 857 927**
**GB-A- 2 064 664**
**US-A- 3 565 289**
**US-A- 3 717 177**

(73) Patentinhaber: **Drägerwerk Aktiengesellschaft, Moislinger Allee 53-55, D-2400 Lübeck 1 (DE)**

(72) Erfinder: **Röhling, Holmer, Ing.grad., Bischofsteicher Weg 28, D-2067 Reinfeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Misch- und Dosiervorrichtung für strömende Medien, insbesondere aus gasförmigen Komponenten, welche in eine Mischkammer mündende, jeweils einen Druckminderer enthaltende Zuführungsleitungen und einen Mischgasauslaßkanal aufweist, wobei eine federelastisch vorgespannte druckempfindliche Einrichtung eine Wand der Mischkammer bildet und zur sprunghaften Trennung der Zuführungsleitungen von dem Mischgasauslaßkanal vorgesehen ist.

Eine Misch- und Dosiervorrichtung der genannten Art ist aus der DE-OS 2 224 588 bekanntgeworden. Bei dieser Vorrichtung werden zwei zu mischende Gaskomponenten über jeweils eine Zuführungsleitung in eine Mischkammer geführt. Jede Zuführungsleitung ist mit einem Ventil zu deren vollständigen Öffnen oder Schließen versehen. Die Ventilteller sind mit einer druckempfindlichen Einrichtung verbunden, welche in Abhängigkeit von dem Mischkammerüberdruck die Gaszufuhr in die Mischkammer sprunghaft unterbricht oder freigibt. Die Mischkammer ist mit einem Mischgasauslaßkanal verbunden, durch welchen das Mischgas dem Verbraucher zugeführt wird. Fällt der Druck in der Mischkammer infolge erhöhter Abnahme von Mischgas unter einen bestimmten Wert, werden die Einlaßventile geöffnet, um Gas mit höherem Druck in die Mischkammer eintreten zu lassen. Sinkt die Entnahme von Mischgas aus dem Mischgasauslaßkanal und steigt somit der Druck in der Mischkammer an, unterbricht die druckempfindliche Einrichtung die Gaszufuhr in die Mischkammer, indem die Einlaßventile sprunghaft geschlossen werden. Der Schaltdruck für das Öffnen und Schließen der Einlaßventile wird durch den Überdruck in der Mischkammer relativ zum Umgebungsdruck bestimmt.

Diese druckempfindliche Einrichtung, welche bei Unterschreiten eines bestimmten Mischkammerdruckes die Zuführungsleitungen verschließt, ist vorgesehen, weil bei Unterschreiten eines bestimmten Komponentendruckes in den Zuführungsleitungen, oder bei Unterschreiten eines bestimmten Entnahmestromes aus der Mischgasleitung die einmal eingestellten Mischverhältnisse nicht mehr einzuhalten sind.

Da jedoch der Druckwert für das sprunghafte Öffnen und Schließen der Zuführungsleitungen in bezug auf den Umgebungsdruck fest eingestellt ist, wird auch bei einem höheren verfügbaren Betriebsdruck in den Zuführungsleitungen der Verbraucher nur den vorgegebenen niedrigen Mischgasdruck erhalten. Eine Ausnutzung höherer verfügbarer Speisedrücke zur Schaffung höherer Mischgasdrücke ist nicht möglich.

Eine weitere Misch- und Dosiervorrichtung ist aus der US-3 565 289 bekannt. In dieser Schrift werden zwei Fluide aus je einer Zuführungsleitung über ein zugeordnetes, einstellbares Druckventil dosiert und über eine einstellbare Drossel einer Mischkammer und einem Mischauslaß zugeführt. Jedes Druckventil ist an einen Membrandruckregler angeschlossen, dessen beide Membrankammern mit den Druckkammern der Druckventile verbunden sind. Dadurch ist

für eine Gleichdruckregelung gesorgt. Jedoch wird bei extremen Differenzen der Versorgungsdrücke in den Zufuhrleitungen der Gleichdruckregler versuchen, die Druckventile in ihren Öffnungsquerschnitten soweit an die geänderten Druckverhältnisse anzupassen, daß auch geringste Querschnittsöffnungen an den Druckventilen verwirklicht werden.

Ein definiertes Mischverhältnis ist bei Unterschreiten des Betriebsdruckes einer Komponente oder des Mischgasdruckes unterhalb eines Schwellwertes nicht mehr aufrechtzuerhalten. Der Betrieb eines solchen Mischers ist dann zwar noch möglich, nicht jedoch mit der erforderlichen Mischgenauigkeit.

Die Aufgabe vorliegender Erfindung wird darin gesehen, eine Misch- und Dosiervorrichtung der genannten Art so zu verbessern, daß bei Unterschreiten eines an der druckempfindlichen Einrichtung einstellbaren vorgebbaren Schaltdruckes der Betrieb des Mischers sprunghaft auch dann unterbrochen wird, wenn sich sowohl der Betriebsdruck in den Zufuhrleitungen als auch der Mischgasdruck in der Mischkammer soweit zueinander verschieben, daß ein mit der erforderlichen Genauigkeit gewünschtes Mischungsverhältnis nicht mehr gewährleistet werden kann.

Diese Aufgabe wird durch die kennzeichnenden Merkmale des Anspruchs 1 gelöst.

Durch die Erfindung ist erzielt worden, daß die Mischvorrichtung unabhängig vom Anschlußdruck in den Zuführungsleitungen beim Unterschreiten einer einmal eingestellten Druckdifferenz zwischen der Mischkammer und der Gasauslaßkammer schließt. Sobald diese Druckdifferenz überschritten wird, öffnet sich der Verbindungskanal zwischen Mischkammer und Gasauslaßkammer sprunghaft, und das Gasgemisch strömt von der Mischkammer in die Gasauslaßkammer. Steigt bei geöffnetem Verbindungskanal der Versorgungsdruck in beiden Gaseinlaßkanälen gleichmäßig, steigt in der Gasauslaßkammer der Druck entsprechend, so daß der Verbindungskanal geöffnet bleibt, sofern nur die Druckdifferenz zwischen Mischkammer und Gasauslaßkammer den eingestellten unteren Grenzwert überschreitet. Auf diese Weise erhält man eine Misch- und Dosiervorrichtung für strömende Medien, bei welcher der Druck im Mischgaskanal dem Druck in den Gaseinlaßkanälen folgt.

Die erfindungsgemäße Misch- und Dosiervorrichtung kann daher mit ihren einmal eingestellten Werten für das Mischungsverhältnis und für den Umschaltdruck an eine Gasversorgungsanlage mit unterschiedlichen Betriebsdrücken angeschlossen werden und bei Vorliegen höherer Betriebsdrücke den Verbraucher auch mit höheren Mischgasdrücken versorgen.

In weiterer Ausgestaltung der Erfindung kann die druckempfindliche Einrichtung eine Tellerfeder zum sprunghaften Verschließen des Verbindungskanals und eine Stellfeder zur Einstellung des erforderlichen Differenzdruckes zwischen Mischkammer und Gasauslaßkammer aufweisen.

In bevorzugter Weise kann die Druckkraft der Stellfeder durch eine Einstellvorrichtung verändert werden.

In besonders einfacher Weise wird die Verschlußeinrichtung als ein Ventilsitz ausgebildet, welcher gegenüber dem Zwischensteg in der Mischkammer bewegbar angeordnet ist.

Zweckmäßigerweise ist der Mischkammer eine Dosiereinheit vorgelagert, mit welcher infolge Verdrehens zweier gegenläufig bewegbaren Ventilscheiben das Mischungsverhältnis eingestellt werden kann.

In weiterer vorteilhafter Ausgestaltung der Erfindung ist vorgesehen, die Mischkammer mit einer weiteren Dosiereinheit auszustatten, welche zu der ersten Dosiereinheit parallel geschaltet ist. Beide Dosiereinheiten werden von denselben Zuführungsleitungen gespeist. Die zusätzliche Dosiereinheit wird zweckmäßigerweise auf die genaue Dosierung der beiden zu mischenden Gaskomponenten in einem unteren Strömungsbereich, beispielsweise von 1 bis 10 l/min, und die erste Dosiereinheit auf die genaue Dosierung in einem oberen Strömungsbereich, beispielsweise von 10 bis 100 l/min, abgestimmt.

Wird Mischgas im unteren Strömungsbereich entnommen, erfolgt eine Dosierung lediglich über die Zusatzeinheit. Steigt der Verbrauch auf den oberen Strömungsbereich, wird die erste Dosiereinheit durch die druckempfindliche Einrichtung zugeschaltet.

Man erhält dadurch eine Misch- und Dosiereinheit, welche in einem Hohen dynamischen Bereich von beispielsweise 1:100 genau dosiertes Mischgas liefert. Durch paralleles Hinzuschalten weiterer Dosiereinheiten kann entweder derselbe Dynamikbereich stufenweise feiner unterteilt, oder ein höherer Dynamikbereich als beispielsweise 1:100 erzielt werden.

In einer nachfolgend dargestellten schematischen Zeichnung wird ein Ausführungsbeispiel der Erfindung näher erläutert; dabei ist zur weiteren Erläuterung ein Gleichdruckregler dargestellt, für den in einer Teilanmeldung zu vorliegender Anmeldung Patentschutz begehrt wird.

Es zeigen:

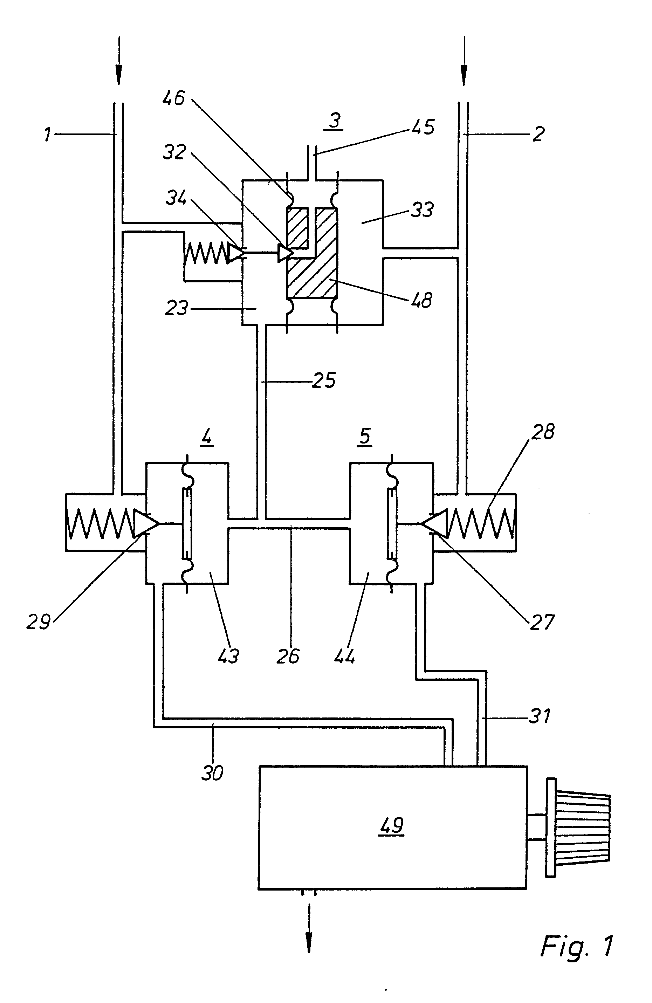

Fig. 1 den Mischer mit vorgeschaltetem Gleichdruckregler im Teilschnitt

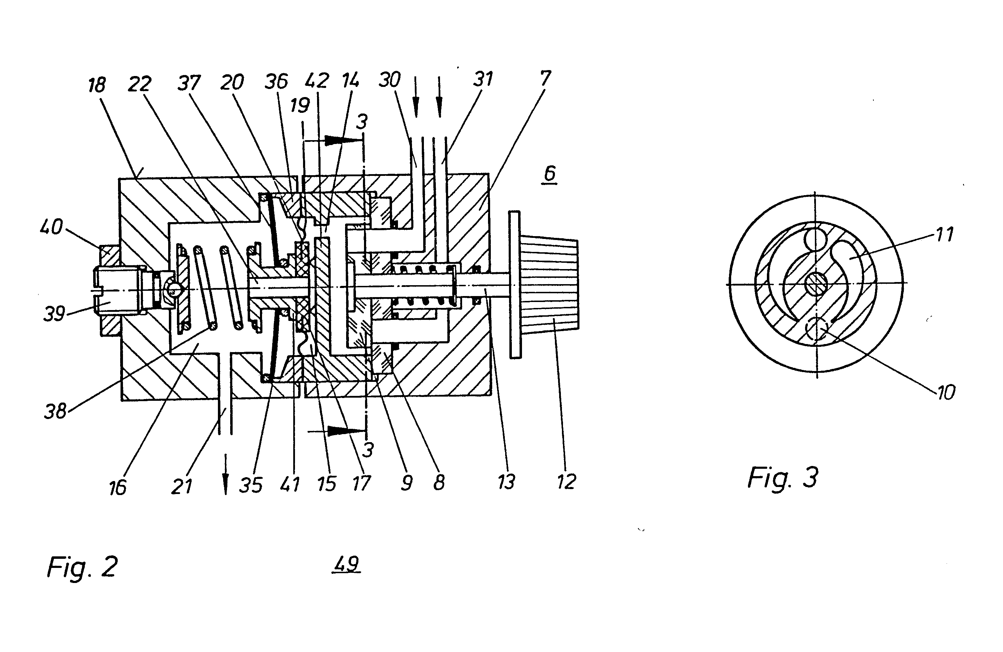

Fig. 2 den Mischer in vergrößerter Schnittdarstellung

Fig. 3 den Schnitt 3-3 durch das Scheibenventil

Fig. 4 den Mischer mit einer Doppeldosiereinheit.

Die der Gasmischvorrichtung über die Komponentenleitungen 1, 2 zugeführten zu mischenden Gase werden in den vom Steuerdruckregler 3 pneumatisch angesteuerten Druckminderern 4, 5, die einen Gleichdruckregler bilden, auf gleiche Drücke gebracht. Die Druckhöhe wird selbsttätig über den Steuerdruckregler 3 von dem jeweils niedrigeren der Drücke in den Komponentenleitungen 1, 2 bestimmt. Die Einstellung der Mischungsverhältnisse und die Mischung selbst erfolgt in dem Mischer 49. Dieser enthält eine Dosiereinheit 6, welche als Scheibenventil ausgebildet ist. Im Gehäuse 7 ist die mit zwei Öffnungen 10 ausgestattete Ventilscheibe 8 fest eingesetzt. In der darüber liegenden drehbar gelagerten Ventilscheibe 9 sind zwei in ihrem Querschnitt gegenläufig sich verändernde Öffnungen 11 angebracht. Durch Drehen des Einstellknopfes 12 für das Mischungsverhältnis und der Welle 13 werden die Öffnungen 11 der Scheibe 9 mehr oder weniger stark, gemäß dem gewünschten Mischungsverhältnis, mit den Öffnungen 10 der Scheibe 8 in Deckung gebracht. Die gemischten Gase gelangen über die Durchbrüche 14 in die Mischkammer 15. Die Mischkammer 15 ist von der Gasauslaßkammer 16 durch eine zwischen dem Gehäuse 18 und einem Membranträger 17 eingespannte Membran 19 gasdicht abgeteilt. Wenn der Differenzdruck zwischen der Mischkammer 15 und der Gasauslaßkammer 16 ein bestimmtes Maß (z.B. 0,2 bar) übersteigt, überwiegt die von dem Membranträger 17 ausgeübte Kraft die gemeinsame Kraft der Stellfeder 38 und der Tellerfeder 37, so daß der Membranträger 17 sprunghaft unter der Wirkung der an ihrem Umfang 35 durch Paßstücke 36 eingespannten Tellerfeder 37 den Ventilsitz 20 über das Mitnehmerstück 41 vom Zwischensteg 42 abhebt und den Mischgasflow über die Gasauslaßkammer 16 zum Mischgasauslaßkanal 21 freigibt. Bei ansteigendem Druck auf der Gasauslaßseite (z.B. aufgrund geringer Gasentnahme) sinkt die Druckdifferenz zwischen Mischkammer 15 und Gasauslaßkammer 16 wieder, so daß der Membranträger 17 wieder die Ausgangsstellung einnimmt und den Ventilsitz 20 verschließt.

Bei Druckdifferenzen zwischen Mischkammer 15 und Gasauslaßkammer 16 oberhalb der Mindestdifferenz bleibt der Verbindungskanal 22 stets geöffnet, so daß das Mischungsverhältnis nur durch die Vorwahl der Drosselquerschnitte der Ventilscheiben 8, 9 bestimmt wird.

Die Einstellung der erforderlichen Druckdifferenz geschieht mittels Verstellung der Stellfeder 38 über Schraube 39 und Mutter 40.

Die Funktionsweise des Gleichdruckreglers in Verbindung mit der Misch- und Dosiervorrichtung wird im folgenden erläutert.

Ist der Druck in der Komponentenleitung 2 größer als in der Komponentenleitung 1, wird dieser Druck in der Steuerkammer 33 des Steuerdruckreglers 3 das Ventil 34 ständig offenhalten. Der Gasdruck aus Leitung 1 herrscht dann auch über die Steuerleitungen 25, 26 in den Steuerkammern 43, 44 der Druckminderer 4, 5. Der Druck in der Komponentenleitung 2 setzt sich auf das Ventil 27 fort und bewegt dieses in Schließrichtung unter gleichzeitiger Schließwirkung der Feder 28, da in seiner Steuerkammer 44 der niedrigere Druck aus der Komponentenleitung 1 herrscht. Das Ventil 29 des Druckminderers 4 wird entsprechend weit geöffnet, so daß die Drücke in den Zuführungsleitungen 30, 31 jeweils, einander gleich, dem niedrigeren der beiden Komponentendrücke, in diesem Falle dem Druck in der Komponentenleitung 1, entsprechen.

Bei Druckgleichheit zwischen den Komponentenleitungen 1, 2 schließt das Ventil 34. Der Steuerdruck entspricht dabei dem Gasdruck in Leitung 1 und somit auch in Leitung 2.

Damit auch bei weiter sinkendem Gasdruck in der Komponentenleitung 2 der Steuerdruck in der Membrankammer 23 dem sinkenden Druck in der Steuerkammer 33 folgen kann, besitzt der Steuerdruckregler 3 eine Entlüftungsöffnung 45. Die Entlüftungsöffnung 45 befindet sich im Zwischenraum einer Doppelmembran 46, die ein Zwischenstück 48 aufnimmt, welches das druckgesteuerte Auslaßventil 32 und die Entlüftungsöffnung 45 strömungsmäßig verbindet.

Bei weiter sinkendem Gasdruck in der Komponentenleitung 2 öffnet das Auslaßventil 32 so lange, bis der Steuerdruck durch Entlastung über das Auslaßventil 32 auf den neuen Wert gesunken ist, der dem Druck in Komponentenleitung 2 entspricht. Diesem Steuerdruck entspricht auch der Hinterdruck der Druckminderer 4, 5 in den Zuführungsleitungen 30, 31. Solange der Verbindungskanal 22 geöffnet ist, d.h. solange eine vorgebbare Druckdifferenz zwischen Mischkammer 15 und Gasauslaßkammer 16 erreicht wird, wird sich der Druck der Zuführungsleitungen 30, 31 bis zum Mischgasauslaßkanal 21 fortsetzen. Somit erhält man einen Mischgasdruck, welcher «floatend» zu den Eingangsdrücken der Druckminderer 4, 5 nachgeregelt wird.

Bei geschlossenem Verbindungskanal 22, d.h. wenn die erforderliche Druckdifferenz zwischen Mischkammer 15 und Gasauslaßkammer 16 infolge verschwindender Mischgasentnahme nicht mehr aufrecht erhalten werden kann, wird der sich aufbauende Druckstau in den Komponentenleitungen 1, 2 ein sicheres und definiertes Verschließen der beiden Ventile 27, 29 bewirken. Bei anschließendem Öffnen des Verbindungskanals 22, z.B. bei steigender Entnahme aus dem Mischgasauslaßkanal 21, werden in den Zuführungsleitungen 30, 31 die ursprünglich eingestellten Druckverhältnisse wiederhergestellt.

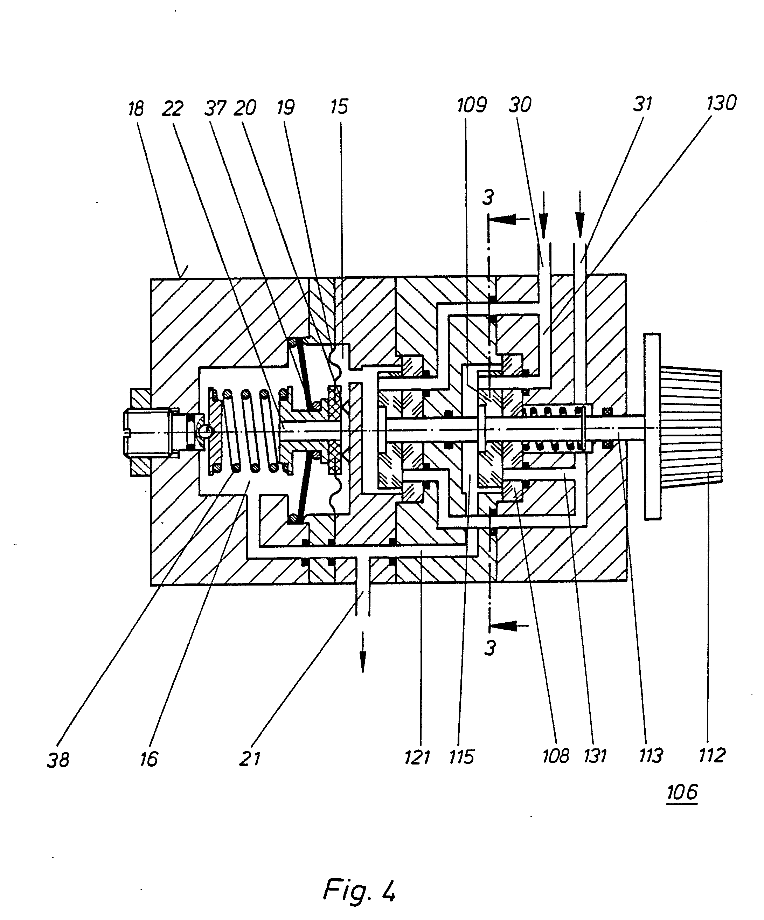

Die in Fig. 4 dargestellte Misch- und Dosiervorrichtung ist mit einer zusätzlichen Dosiereinheit 106 versehen, welche in Parallelschaltung zur ersten Dosiereinheit angeordnet ist. Von den Zuführungsleitungen 30, 31 in die erste Mischkammer 15 zweigen jeweils ein Kanal 130 und 131 in die Mischkammer 115 ab. Von dort führt eine Mischgasleitung 121 zum Mischgasauslaßkanal 21 aus der Gasauslaßkammer 16.

Die Dosierung der Gaskomponenten aus den Abzweigkanälen 130, 131 erfolgt über zwei gegeneinander verdrehbar angeordnete Ventilscheiben 108, 109 in derselben Weise, wie dies bei der einstufigen Dosiereinheit 6 und deren Ventilscheiben 8 und 9 der Fall ist. Die drehbar angeordneten Ventilscheiben 9, 109 beider Dosiereinheiten sind mittels der Handhabe 112, 113 gleichzeitig betätigbar.

Bei Entnahme einer nur geringen Mischgasmenge aus dem Mischgasauslaßkanal 21 bleibt der Verbindungskanal 22 wegen der zu geringen Druckdifferenz zwischen Gasauslaßkammer 16 und Mischkammer 15 geschlossen, und das Mischgas wird lediglich der Mischkammer 115 über die Mischgasleitung 121 entnommen. Erhöht sich die entnommene Mischgasmenge derart, daß sie die Lieferleistung der Dosiereinheit 106 übersteigt, wird die dann zwischen Gasauslaßkammer 16 und Mischkammer 15 erzeugte Druckdifferenz den Membranträger 17 entgegen der Kraft der Stellfeder 38 und der Tellerfeder 37 mit einem Ventilsitz 20 abheben. Jetzt ist die zusätzliche Verbindung zwischen Mischkammer 15 und Gasauslaßkammer 126 über den Verbindungskanal 22 hergestellt. Die Gasentnahme erfolgt nunmehr über beide Mischkammern 15, 115.

Für geringere Gasentnahmemengen kann die Dosiereinheit 106 und für erhöhte Gasentnahmemengen die Dosiereinheit 6 optimal kalibriert werden.

## Patentansprüche

1. Misch- und Dosiervorrichtung für strömende Medien, insbesondere aus gasförmigen Komponenten, welche in eine Mischkammer (15) mündende, jeweils einen Druckminderer (4, 5) enthaltende Zuführungsleitungen (30, 31) und einen Mischgasauslaß (21) aufweist, wobei eine federelastisch vorgespannte druckempfindliche Einrichtung (17, 19) eine Wand der Mischkammer (15) bildet und zur sprunghaften Trennung der Zuführungsleitungen (30, 31) von dem Mischgasauslaßkanal (21) vorgesehen ist, dadurch gekennzeichnet, daß die federelastische vorgespannte druckempfindliche Einrichtung (17, 19) als Tennwand zwischen der Mischkammer (15) und der mit dem Mischgasauslaßkanal (21) versehenen Mischgasauslaßkammer (16) ausgebildet ist, wobei die Einrichtung (17) einen mit einer Verschlußeinrichtung (20) versehenen Verbindungskanal (22) zwischen Mischkammer (15) und Gasauslaßkammer (16) aufweist.

2. Vorrichtung nach Anspruch 1, dadurch gekennzeichnet, daß die Verschlußeinrichtung ein Ventilsitz (20) ist, der zur Absperrung des Verbindungskanals (22) von der druckempfindlichen Einrichtung (17) gegenüber einem Zwischensteg (42) in der Mischkammer (15) bewegbar ist.

3. Vorrichtung nach Anspruch 1, dadurch gekennzeichnet, daß die Mischkammer (15) eine Dosiereinheit (6) aufweist, welche eine erste feststehende mit zwei Öffnungen (10) versehene Ventilscheibe (8) und eine gegenüber der ersten mittels einer Handhabe (12, 13) drehbar angeordnete und mit im Querschnitt sich verändernden Öffnungen (11) versehene zweite Ventilscheibe (9) enthält.

4. Vorrichtung nach Anspruch 3, dadurch gekennzeichnet, daß der Mischgasauslaßkanal (21) mit einer weiteren Mischkammer (115) über eine Mischgasleitung (121) verbunden ist, und daß die Mischkammer (115) mit einer zusätzlichen Dosiereinheit (106) verbunden ist, welche eine erste feststehende mit zwei Öffnungen (10) versehene Ventilscheibe (108) und eine gegenüber der ersten mittels einer Handhabe (112, 113) drehbar angeordnete und mit in Querschnitt sich verändernden Öffnungen (11) versehene zweite Ventilscheibe (109) enthält, wobei die Ventilscheiben (9, 109) durch die Handhabe (112, 113) gleichzeitig verdrehbar angeordnet sind und die Zuführungsleitungen (30, 31) Abzweigungskanäle (130, 131) in die zusätzliche Dosiereinheit (106) aufweisen.

## Claims

1. Mixing and dosing apparatus for flowing media, more particularly consisting of gaseous constituents, which apparatus has supply lines (30, 31), which open into a mixing chamber (15) and contain, in each case, a pressure reducer (4, 5), and a mixed gas outlet (21), a pressure-sensitive device (17, 19), which is prestressed in a spring-elastic manner, forming a wall of the mixing chamber (15) and being provided for the sudden separation of the supply lines (30, 31) from the mixed gas outlet channel (21), characterised in that the pressure-sensitive device (17, 19), which is prestressed in a spring-elastic manner, is formed as a dividing wall between the mixing chamber (15) and the mixed gas outlet chamber (16) provided with the mixed gas outlet channel (21), the device (17) having a connection channel (22), which is provided with a sealing device (20), between mixing chamber (15) and gas outlet chamber (16).

2. Apparatus according to claim 1, characterised in that the sealing device is a valve seat (20) which is movable relative to an intermediate bar (42) in the mixing chamber (15) for the purpose of blocking off the connection channel (22) from the pressure-sensitive device (17).

3. Apparatus according to claim 1, characterised in that the mixing chamber (15) has a dosing unit (6) which contains a first fixed valve disc (8) which is provided with two openings (10) and a second valve disc (9) which is arranged such that it may be rotated relative to the first by means of a handle (12, 13) and is provided with openings (11) varying in cross section.

4. Apparatus according to claim 3, characterised in that the mixed gas outlet channel (21) is connected with a further mixing chamber (115) by way of a mixed gas line (121) and in that the mixing chamber (115) is connected with an additional dosing unit (106) which contains a first fixed valve disc (108) which is provided with two openings (10) and a second valve disc (109) which is arranged such that it may be rotated relative to the first by means of a handle (112, 113) and which is provided with openings (11) varying in cross section, the valve discs (9, 109) being arranged such that they may be turned simultaneously by the handle (112, 113) and the supply lines (30, 31) having branch channels (130, 131) leading into the additional dosing unit (106).

**Revendications**

1. Dispositif de mélange et de dosage de milieux fluides, notamment constitués de composants gazeux, qui présente des conduites d'amenée (30, 31) contenant un réducteur de pression respectif (4, 5) et débouchant dans une chambre de mélange (15), et qui présente une sortie de gaz mélangé (21), un dispositif (17, 19), sensible à la pression et précontraint par élasticité de ressort, formant une paroi de la chambre de mélange (15) et étant prévu pour la séparation discontinue des conduites d'amenée (30, 31) du canal de sortie du gaz mélangé (21), caractérisé en ce que le dispositif (17, 19) sensible à la pression et précontraint par élasticité de ressort est réalisé sous la forme d'une paroi séparatrice entre la chambre de mélange (15) et la chambre de sortie du gaz mélangé (16) munie du canal de sortie du gaz mélangé (21), le dispositif (17) présentant un canal de liaison (22) entre la chambre de mélange (15) et la chambre de sortie de gaz (16), canal qui est muni d'un dispositif obturateur (20).

2. Dispositif selon la revendication 1, caractérisé en ce que le dispositif obturateur est un siège de valve (20) qui, afin d'isoler le canal de liaison (22), est déplaçable, sous l'effet du dispositif sensible à la pression (17), vis-à-vis d'une nervure intermédiaire (42) dans la chambre de mélange (15).

3. Dispositif selon la revendication 1, caractérisé en ce que la chambre de mélange (15) présente une unité de dosage (6) qui contient un premier disque de valve (8) fixe et muni de deux ouvertures (10), et un deuxième disque de valve (9), disposé rotatif par rapport au premier au moyen d'une poignée (12, 13), et muni d'ouvertures (11) à section variable.

4. Dispositif selon la revendication 3, caractérisé en ce que le canal de sortie du gaz mélangé (21) est relié à une autre chambre de mélange (115) par l'intermédiaire d'une conduite de gaz mélangé (121), et en ce que la chambre de mélange (115) est reliée à une unité de dosage supplémentaire (106), laquelle contient un premier disque de valve (108) fixe et muni de deux ouvertures (10), et un deuxième disque de valve (109), disposé rotatif par rapport au premier au moyen d'une poignée (112, 113) et muni d'ouvertures (11) à section variable, les disques de valve (9, 109) étant disposés simultanément rotatifs par la poignée (112, 113), et les conduites d'amenée (30, 31) présentant des canaux de dérivation (130, 131) dans l'unité de dosage supplémentaire (106).

Fig. 1

Fig. 2

Fig. 3

EP 0 204 066 B1

Fig. 4

11